# EUROPEAN PATENT APPLICATION

(11) **EP 4 206 932 A1**
(43) Date of publication of application: **05.07.2023**
(21) Application number: 20954498.0
(22) Date of filing: 24.09.2020
(51) Int. Cl.: G06F 11/30

(54) **DATA PROCESSING APPARATUS AND METHOD**

(71) Applicant: Huawei Technologies Co., Ltd., Shenzhen, Guangdong 518129 (CN)
(72) Inventor: XIA, Jing, Shenzhen, Guangdong 518129 (CN); LI, Bing, Shenzhen, Guangdong 518129 (CN); WU, Shuang, Shenzhen, Guangdong 518129 (CN)
(74) Representative: Goddar, Heinz J.
(86) International application number: PCT/CN2020/117414
(87) International publication number: WO 2022/061646

(57) **Abstract**

A data processing apparatus (100) and a method are disclosed. The data processing apparatus (100) includes a remote direct memory access RDMA module (110), a home agent HA module (120), and a memory module (130). The HA module (120) performs calculation on local data and an operand in an RDMA packet, and writes an obtained calculation result into the memory module (130) through a non-bus interface, which can help prevent reading of the local data from the memory module (130) through a bus and writing of the calculation result into the memory module (130) through the bus. Therefore, the data processing apparatus (100) can optimize a calculation part in a node that performs collective communication, which helps reduce an inter-node communication delay. In addition, the data processing apparatus (100) can reduce a quantity of bus access times, thereby helping reduce bandwidth consumption of the bus.

## Description

### TECHNICAL FIELD

This application relates to a computer field, and more specifically, to a data processing apparatus and method.

### BACKGROUND

With rapid development of high-performance computing (high performance computing, HPC) clusters and artificial intelligence (artificial intelligence, AI), data computing requirements are increasing. In an HPC or AI application scenario, there are a large number of processes, and processing of a plenty of data needs a plurality of processes to cooperate. In a scenario where a plurality of processes cooperate, collective communication (collective communication) is required. As an example, in the collective communication, a proportion of a topology structure of an MPI_reduce calculation (MPI_reduce) or an MPI_allreduce calculation (MPI_allreduce) may be relatively large, for example, as high as 40%. Therefore, it is necessary to optimize these algorithms. The calculation (calculation) is an important part of the MPI_reduce or the MPI_allreduce. Execution efficiency of the calculation part greatly affects execution efficiency of the collective calculation algorithms. Therefore, an optimization of the calculation part is especially important.

In an HPC or AI scale out (seal out) solution, data required for the MPI reduce or MPI_allreduce calculation is generally from a plurality of nodes. Data needs to be transmitted between nodes through the network before calculation. The remote direct memory access (remote direct memory access, RDMA) technology features high bandwidth and low delay. It can be used as a technical means to improve the communication bandwidth between nodes and reduce the communication delay between nodes in the HPC or AI scenario.

In a current collective communication solution, the calculation part involves a relatively large quantity of read operations and write operations. For example, an RDMA module at a server (server) end needs to perform at least one read operation and one write operation on a memory module through a bus. This causes a delay and bandwidth consumption. Therefore, how to optimize the calculation part to reduce the delay and bandwidth consumption is an urgent issue to be addressed.

### SUMMARY

This application provides a data processing apparatus and a method to optimize a calculation part in a node that performs collective communication, help reduce an inter-node communication delay, and reduce a quantity of bus access times, thereby helping reduce bandwidth consumption of the bus.

According to a first aspect, a data processing apparatus is provided, including a remote direct memory access RDMA module, a home agent HA module and a memory module, where the RDMA module communicates with the home agent module through a bus, and the home agent module communicates with the memory module through a non-bus interface.

The RDMA module is configured to:
receive an RDMA packet, and obtain an operand in the RDMA packet; and
send a first command and the operand to the home agent module through the bus, where the first command is used to instruct the home agent module to perform a calculation operation on the operand.

The home agent module is configured to:
perform calculation on the operand and local data according to the first command to obtain a calculation result; and
write the calculation result to the memory module through the non-bus interface.

Therefore, in this embodiment of this application, the HA module performs calculation on the local data and the operand in the RDMA packet, and writes the obtained calculation result into the memory module through the non-bus interface, which can help prevent the RDMA module from reading the local data from the memory module through the bus and writing the calculation result into the memory module through the bus. Therefore, in this embodiment of this application, a calculation part in a node that performs collective communication can be optimized, which helps reduce an inter-node communication delay. Further, in this embodiment of this application, a quantity of bus access times can be reduced, thereby helping reduce bandwidth consumption of the bus.

As an example, because the read operation and the write operation performed by the HA module on the memory module do not need to involve the bus, the delay of the data processing process includes only one write operation performed on the bus, thereby helping to reduce the delay of the collective communication algorithm operation.

It should be noted that, that the RDMA module communicates with the HA module through a bus means that when data is exchanged between the RDMA module and the HA module, the data needs to be transmitted through the bus. That the HA module communicates with the memory module through a non-bus interface means that the HA module and the memory module do not communicate with each other through the bus. That is, when data is exchanged between the HA module and the memory module, the data does not need to be transmitted through the bus. For example, data between the HA module and the memory module may be transmitted through a private interface (or a dedicated interface).

As an example, in a computer system, the HA module may be disposed at a position that is relatively close to the memory module, so that the HA module may perform a read operation and/or a write operation on the memory module, so as to shorten a delay when the HA module performs the read operation or the write operation on the memory module. In some optional embodiments, the HA module may directly perform the read operation or the write operation on the memory module without involving a cache (for example, an L1 cache, an L2 cache, or an L3 cache, which is not limited).

For example, the HA module may be a hardware module, for example, may be a general purpose processor, a digital signal processor (digital signal processor, DSP), an application-specific integrated circuit (application specific integrated circuit, ASIC), a field programmable gate array (field programmable gate array, FPGA) or another programmable logic device, a discrete gate or a transistor logic device, or a discrete hardware component. This is not limited.

For example, the memory module may be a dynamic random access memory (dynamic random access memory, DRAM), or a synchronous dynamic random access memory (synchronous DRAM, SDRAM), or a double data rate synchronous dynamic random access memory (double data rate SDRAM, DDR SDRAM), and the like, which is not limited.

With reference to the first aspect, in some implementations of the first aspect, the home agent module is further configured to read, through the non-bus interface, the local data from the memory module. In this way, after receiving the first command and the operand, the HA module may calculate the operand and the local data according to the first command. Therefore, this application can help prevent the RDMA module from reading the local data from the memory module through the bus. Therefore, the calculation part in the node that performs collective communication can be optimized, which helps reduce the inter-node communication delay. Further, in this embodiment of this application, the quantity of bus access times can be reduced, thereby helping reduce the bandwidth consumption of the bus.

In some possible embodiments, the home agent module may further store the local data in advance (for example, before receiving the first command). This is not limited in this embodiment of this application.

With reference to the first aspect, in some implementations of the first aspect, the home agent module is further configured to send a response message corresponding to the first command to the RDMA module through the bus, where the response message is used to indicate that the calculation operation is completed. Herein, the response message is a response to one bus write operation, and a delay of the response message is included in the bus write operation. Correspondingly, the RDMA module receives the response message, and can determine, according to the response message, that the calculation operation on the operand in the RDMA packet is completed.

With reference to the first aspect, in some implementations of the first aspect, the apparatus further includes a central processing unit CPU, and the RDMA module is further configured to report an interrupt to the CPU, where the interrupt is used to indicate completion of the calculation operation. Correspondingly, when receiving the interrupt, the CPU may determine that the calculation operation is completed.

With reference to the first aspect, in some implementations of the first aspect, the apparatus further includes a central processing unit CPU, and the RDMA module is further configured to receive polling of the CPU to return completion of the calculation operation.

With reference to the first aspect, in some implementations of the first aspect, the RDMA module is specifically configured to determine, according to a first indication field in a packet header of the RDMA packet, that a collective communication calculation needs to be performed on data in a payload of the RDMA packet; and determine the data in the payload as the operand. In this way, the RDMA module may determine, according to the obtained RDMA packet, that the collective communication calculation needs to be performed, and obtain the operand for performing the collective communication calculation.

Herein, the first indication field may be used to instruct to perform collective communication calculation on the data in the payload of the RDMA packet. In this application, by using the first indication field in the RDMA packet header, it is flexible to indicate whether to perform collective communication calculation on data in a payload of each RDMA packet.

In some possible implementations, the first indication field may be included in opcode of a base transport header of the RDMA packet. This is not limited in this application.

In some other possible implementations, it may be further specified, by using a queue pair context (queue pair context, QPC) and/or a memory area (memory region, MR), that the collective communication calculation needs to be performed on the data in the payload of the RDMA packet.

With reference to the first aspect, in some implementations of the first aspect, the collective communication calculation includes a collective communication MPI_reduce calculation, or a collective communication MPI_allreduce calculation.

With reference to the first aspect, in some implementations of the first aspect, the RDMA module is further configured to: determine, according to a second indication field in the packet header of the RDMA packet, the calculation operation that needs to be performed on the operand; and generate the first command according to the calculation operation. In this way, the RDMA module may generate, according to the obtained RDMA packet, the first command used to instruct to perform the calculation operation.

Herein, the second indication field may be used to indicate the calculation operation performed on the data in the payload of the RDMA packet. In this application, by using the second indication field in the RDMA packet header, it is flexible to indicate the calculation operation type performed on data in a payload of each RDMA packet.

In some possible implementations, the second indication field may be implemented by using an RSV field in the base transport header in the RDMA packet, or by adding data encoding in an extended transport header or a payload. This is not limited in this application.

In some other possible implementations, the calculation operation that needs to be performed on the data in the payload of the RDMA packet may be further specified by using a QPC and/or an MR.

With reference to the first aspect, in some implementations of the first aspect, the calculation operation includes at least one of an ADD operation, a MAX operation, an AND operation, an OR operation, an exclusive OR operation, and a MIN operation.

With reference to the first aspect, in some implementations of the first aspect, the RDMA module is an RDMA network interface controller.

According to a second aspect, a data processing method is provided, where the method includes:

A home agent module receives, through a bus, a first command and an operand in an RDMA packet that are sent by an RDMA module, where the first command is used to instruct the home agent module to perform a calculation operation on the operand.

The home agent module performs calculation on the operand and local data according to the first command to obtain a calculation result.

The home agent module writes the calculation result to a memory module through a non-bus interface.

The method may further include: The RDMA module receives the RDMA packet, and obtains the operand in the RDMA packet.

The RDMA module sends the first command and the operand to the home agent module through the bus.

The method may be applied to an apparatus that includes a remote direct memory access RDMA module, a home agent module, and a memory module, for example, the apparatus according to the first aspect or each implementation of the first aspect. The RDMA module communicates with the home agent module through the bus, and the home agent module communicates with the memory module through the non-bus interface.

With reference to the second aspect, in some implementations of the second aspect, the method further includes:

The home agent module reads the local data from the memory module through the non-bus interface.

With reference to the second aspect, in some implementations of the second aspect, the method further includes:

The home agent module sends, through the bus, a response message corresponding to the first command to the RDMA module, where the response message is used to indicate that the calculation operation is completed.

With reference to the second aspect, in some implementations of the second aspect, the method further includes:

The RDMA module reports an interrupt to a central processing unit CPU after receiving the response message, where the interrupt is used to indicate completion of the calculation operation.

With reference to the second aspect, in some implementations of the second aspect, the method further includes:

The RDMA module receives polling of a CPU to return completion of the calculation operation.

With reference to the second aspect, in some implementations of the second aspect, the method further includes:

The RDMA module determines, according to a first indication field in a packet header of the RDMA packet, that a collective communication calculation needs to be performed on data in a payload of the RDMA packet.

The RDMA module determines the data in the payload as the operand.

With reference to the second aspect, in some implementations of the second aspect, the collective communication calculation includes a collective communication MPI_reduce calculation, or a collective communication MPI_allreduce calculation.

With reference to the second aspect, in some implementations of the second aspect, the method further includes:

The RDMA module determines, according to a second indication field in the packet header of the RDMA packet, the calculation operation that needs to be performed on the operand.

The RDMA module generates the first command according to the calculation operation.

With reference to the second aspect, in some implementations of the second aspect, the calculation operation includes at least one of an ADD operation, a MAX operation, an AND operation, an OR operation, an exclusive OR operation, and a MIN operation.

With reference to the second aspect, in some implementations of the second aspect, the RDMA module is an RDMA network interface controller.

It should be understood that, for beneficial effects achieved in the second aspect and the corresponding implementations of this application, refer to beneficial effects achieved in the first aspect and the corresponding implementations of this application. Details are not described again.

### BRIEF DESCRIPTION OF DRAWINGS

FIG. 1 is a schematic diagram of a system architecture corresponding to an existing collective communication solution;
FIG. 2 is a schematic diagram of another system architecture corresponding to an existing collective communication solution;
FIG. 3 is a schematic block diagram of a system architecture according to an embodiment of this application;
FIG. 4 is an example of a format of an RDMA packet;
FIG. 5 is a schematic diagram of an HA module and a common processor core;
FIG. 6 is a schematic block diagram of a data processing apparatus according to an embodiment of this application; and
FIG. 7 is a schematic flowchart of a data processing method according to an embodiment of this application.

### DESCRIPTION OF EMBODIMENTS

The following describes technical solutions of this application with reference to accompanying drawings.

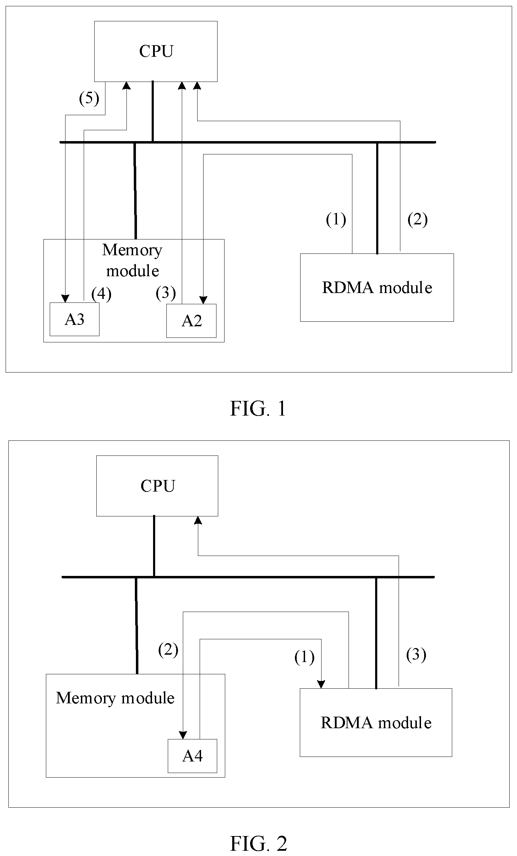

FIG. 1 is a schematic diagram of a system architecture corresponding to an existing collective communication solution. A calculation part in a collective communication calculation algorithm is executed by a CPU in a system. As shown in FIG. 1, the system architecture includes an RDMA module, a memory module, and the CPU. After receiving an RDMA packet in a network, the RDMA module may write a payload (including data A2) in the RDMA packet into the memory module through the bus. The write operation may correspond to a data transmission process corresponding to an arrow corresponding to (1) in FIG. 1.

After the RDMA module writes the payload in the RDMA packet into the memory module, the RDMA module may report an interrupt to the CPU, and the interrupt reporting operation may correspond to a data transmission process corresponding to an arrow corresponding to (2) in FIG. 1. Correspondingly, the CPU may determine, according to the interrupt, that the data A2 in the RDMA packet has been written to the memory. In another possible implementation, the RDMA module may not report the interrupt to the CPU, but the CPU determines, in a polling manner, that the data A2 has been written to the memory.

After determining that the data in the RDMA packet is written into the memory, the CPU may initiate a bus read operation to read the data A2 written into the memory module into the CPU, where the read operation may correspond to a data transmission process corresponding to an arrow corresponding to (3) in FIG. 1. In addition, the CPU may read local data A3 stored in the memory module into the CPU, and the read operation may correspond to a data transmission process corresponding to an arrow corresponding to (4) in FIG. 1.

Then, the CPU completes the calculation of data A2 and A3. After obtaining a calculation result, the CPU writes the calculation result into the memory module through the bus. The write operation may correspond to a data transmission process corresponding to an arrow corresponding to (5) in FIG. 1.

In the data processing process in FIG. 1, for the RDMA module, two write operations (that is, the data transmission processes corresponding to the arrows corresponding to (1) and (5) in FIG. 1) and two read operations (that is, the data transmission processes corresponding to the arrows corresponding to (3) and (4) in FIG. 1) need to be performed on the memory module through the bus in total. For the CPU, the CPU needs to perform one interrupt or polling operation, one write operation (that is, the data transmission process corresponding to the arrow corresponding to (5) in FIG. 1) on the memory module, and two read operations (that is, the data transmission processes corresponding to the arrows corresponding to (3) and (4) in FIG. 1). For the entire system in FIG. 1, a delay of the data processing process includes the data transmission processes corresponding to the arrows corresponding to (1) to (5) in FIG. 1 and a calculation delay of the CPU, where a read or write operation needs to be performed on the bus in each data transmission process in (1) to (5).

FIG. 2 is a schematic diagram of a system architecture corresponding to another existing collective communication solution, where a calculation part in a collective communication calculation algorithm is executed by an RDMA module. As shown in FIG. 2, the system architecture includes the RDMA module, a memory module, and a CPU. Before receiving an RDMA packet, the RDMA module may read data A4 in the memory module through a bus, and wait to participate in calculation. The read operation may correspond to a data transmission process corresponding to an arrow corresponding to (1) in FIG. 2.

The RDAM module receives the RDMA packet in a network, and determines, according to related information in a packet header, that the collective communication calculation (for example, an MPI_reduce or MPI_allreduce calculation) needs to be performed and a corresponding calculation operation type. In this case, the RDMA module may write a calculation result to the memory module through the bus. The write operation may correspond to a data transmission process corresponding to an arrow corresponding to (2) in FIG. 2.

Then, the RDMA module may report an interrupt to the CPU, and the interrupt reporting operation may correspond to a data transmission process corresponding to an arrow corresponding to (3) in FIG. 2. In another possible implementation, the CPU may determine, in a polling manner, whether the calculation operation is completed. In this case, the RDMA module may not report the interrupt to the CPU.

In the data processing process in FIG. 2, for the RDMA module, one read operation (that is, the data transmission process corresponding to the arrow corresponding to (1) in FIG. 2) and one write operation (that is, the data transmission process corresponding to the arrow corresponding to (2) in FIG. 2) need to be performed on the memory module through the bus. For the CPU, one interrupt or polling operation needs to be performed. For the entire system in FIG. 2, a delay of the data processing process includes the data transmission processes corresponding to the arrows corresponding to (1) and (2) in FIG. 2 and a calculation delay of the RDAM module. A read operation or a write operation needs to be performed on the bus in the data transmission processes corresponding to (1) and (2).

In the collective communication solution in FIG. 1 or FIG. 2, the calculation part involves a relatively large quantity of read operations and write operations. For example, in FIG. 1, the RDMA module needs to perform two read operations and two write operations on the memory module through the bus. In FIG. 2, the RDMA module needs to perform one read operation and one write operation on the memory module through the bus. This causes a delay and bandwidth consumption.

In view of this, an embodiment of this application provides a data processing solution. A home agent (home agent, HA) module is added to a system architecture of collective communication. The HA module may calculate local data and an operand in an RDMA packet, and write a calculation result into a memory module through a non-bus interface. This can help prevent the RDMA module from reading the local data from the memory module through a bus and writing the calculation result into the memory module through the bus. Therefore, the calculation part can be optimized, which helps reduce a delay and bandwidth consumption in collective communication.

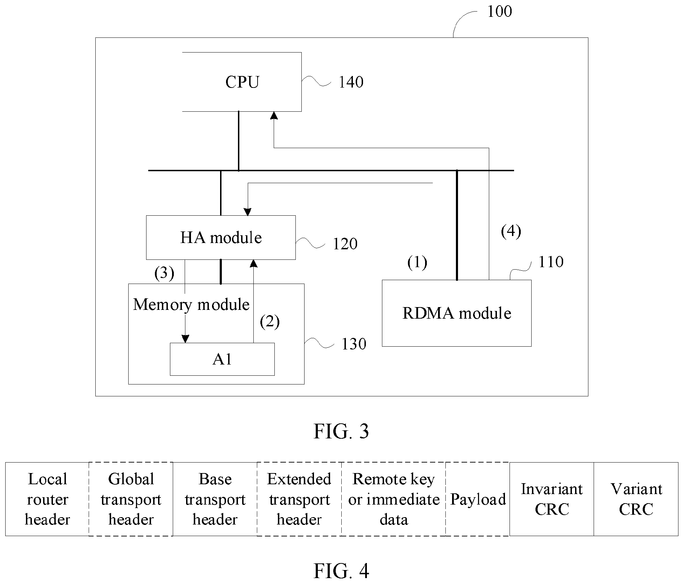

FIG. 3 is a schematic block diagram of a system architecture 100 according to an embodiment of this application. The system architecture 100 may be, for example, an HPC server or an AI training center server. For example, in an HPC or AI application scenario, a plurality of system architectures 100 may be included, and each system architecture 100 may be referred to as one node. In collective communication of the plurality of nodes, data is transmitted between the plurality of nodes by using an RDMA technology, and then data is calculated, to implement MPI_reduce or MPI_allreduce calculation.

It should be noted that, in the plurality of nodes that perform collective communication, after data transmission between nodes is performed by using the RDMA technology, some nodes need to calculate obtained data, and some nodes do not need to calculate obtained data, but may directly transmit the data to a next node. Optionally, after performing calculation on the data, a node may further transmit a calculation result to a next node.

With reference to the system architecture shown in FIG. 3, the following describes a data processing process of one node that performs collective communication, where the node needs to calculate obtained data. It may be understood that, a data processing process of another node that performs collective communication and that needs to perform data calculation is the same as or similar to the data processing process of the node. For details, refer to the data processing process of the node described below. Details are not described again.

As shown in FIG. 3, the system architecture 100 includes an RDMA module 110, a home agent (home agent, HA) module 120, a memory module 130, and a central processing unit (central processing unit, CPU) 140.

The RDMA module 110 may support the RDMA protocol, so that the node in FIG. 3 may perform data transmission with another node by using an RDMA technology, for example, may receive an RDMA packet, and send an RDMA packet. For example, the RDMA module 110 may be specifically an RDMA engine or an RDMA network interface controller (network interface controller, NIC, which may also be referred to as an RDMA network adapter). This is not limited in this application.

In an example, the RDMA module 110 may receive, through the Internet (Internet), an RDMA packet from another node that performs collective communication.

Herein, an operation code (opcode) type of the RDMA packet may be, for example, sending (send), sending with a remote invalid operation (send with invalidate), sending with an immediate (send with immediate), an RDMA write operation (RDMA write), an RDMA write operation with an immediate (RDMA write with immediate), or an RDMA read operation (RDMA read). This is not limited in this embodiment of this application. That is, for the node shown in FIG. 3, another node may send, to the node by using an operation such as send, send with invalidate, send with immediate, RDMA write, RDMA write with immediate, or RDMA read, an RDMA packet on which the MPI_reduce or MPI_allreduce calculation needs to be performed.

After receiving the RDMA packet, the RDMA module 110 may obtain an operand in the RDMA packet, that is, an operand on which the MPI_reduce or MPI allreduce calculation needs to be performed. For example, a data type of the operand may include an 8/16/32/64-bit (bit) integer (int) type, an 8/16/32/64-bit unsigned integer (unsigned INT, UINT) type, or a double-precision floating point number (double) type. This is not limited in this embodiment of this application.

In some possible implementations, the RDMA module 110 may determine, according to a first indication field in a packet header of the RDMA packet, that a collective communication calculation, for example, the MPI_reduce or MPI_allreduce calculation, needs to be performed on data in a payload (payload) of the RDMA packet. The first indication field may be used to instruct to perform collective communication calculation on the data in the payload of the RDMA packet. In this case, the RDMA module 110 may determine the data in the payload of the RDMA packet as the operand. Therefore, by using the first indication field in the RDMA packet header, it is flexible to indicate whether to perform collective communication calculation on data in a payload of each RDMA packet.

In some other possible implementations, it may be further specified, by using a queue pair context (queue pair context, QPC) and/or a memory area (memory region, MR), that the collective communication calculation needs to be performed on the data in the payload of the RDMA packet. The MR is a storage area defined in the RDMA protocol, for example, may be a memory space in which the RDMA module performs receiving or sending. For example, an indication bit #1 may exist in a QPC data structure of a queue pair (queue pair, QP) 1 to instruct to perform a collective communication operation on the data in the payload of the RDMA packet. When the indication bit #1 is valid (even if there is no indication field in the packet header of the RDMA packet in this case), the collective communication calculation is always performed on a packet that belongs to the QP1. For another example, an indication bit #2 exists in a data structure in an MR1 to instruct to perform the collective communication operation on the data in the payload of the RDMA packet. In a case in which the indication bit #2 is valid (even if there is no indication field in the packet header of the RDMA packet in this case), the collective communication calculation is always performed on the RDMA packet that performs an operation on the MR1.

In some possible implementations, the RDMA module 110 may determine, according to a second indication field in the packet header of the RDMA packet, that a calculation (calculation) operation needs to be performed on the data (that is, the foregoing operand) in the payload of the RDMA packet, for example, a calculation operation in the MPI_reduce or MPI_allreduce calculation. The second indication field may be used to indicate the calculation operation performed on the data in the payload of the RDMA packet. Therefore, by using the second indication field in the RDMA packet header, it is flexible to indicate the calculation operation type performed on data in a payload of each RDMA packet.

In some other possible implementations, the calculation operation that needs to be performed on the data in the payload of the RDMA packet may be further specified by using the QPC and/or the MR. For example, an indication bit #3 may exist in the QPC data structure of the QP1 to instruct to perform a calculation operation on the data in the payload of the RDMA packet. When the indication bit #3 is valid (even if there is no indication field in the packet header of the RDMA packet in this case), the calculation operation is always performed on a packet that belongs to the QP1 according to the indication bit #3. For another example, an indication bit #4 exists in the data structure in the MR1 to instruct to perform the calculation operation on the data in the payload of the RDMA packet. In a case in which the indication bit #4 is valid (even if there is no indication field in the packet header of the RDMA packet in this case), the calculation operation is always performed on the RDMA packet that performs an operation on the MR1 according to the indication bit #4.

For example, the calculation operation on the data in the payload of the RDMA packet may include, for example, at least one of an ADD (add) operation, a MAX (max) operation, an AND (and) operation, an OR (or) operation, an exclusive OR (xor) operation, or a MIN (min) operation.

FIG. 4 is an example of a format of an RDMA packet. As shown in FIG. 4, the RDMA packet may include a local router header, a global transport header, a base transport header, an extended transport header, a payload, an invariant CRC, and a variant CRC. In some possible implementations, the first indication field may be included in the opcode in the base transport header, and the second indication field may be implemented by using an RSV field in the base transport header, or by adding data encoding in the extended transport header or payload. This application is not limited thereto.

The RDMA module 110 may communicate with the HA module 120 through a bus. For example, the RDMA module 110 may send an operation command and an operand in the RDMA packet to the HA module 120 through the bus, where the operation command is used to instruct the HA module 120 to perform a calculation operation on the operand. Still refer to FIG. 3. That the RDMA module 110 sends an operation command and an operand to the HA module 120 may correspond to a data transmission process corresponding to an arrow corresponding to (1) in FIG. 3, that is, one bus write operation.

The HA module 120 may communicate with the RDMA module 110 through the bus, and communicate with the memory module 130 through a non-bus interface. For example, the HA module 120 may receive the operand and the operation command from the RDMA module 110 through the bus. The HA module 120 may further read local data, for example, A1, from the memory module 130 through the non-bus interface. Still refer to FIG. 3. That the HA module 120 reads the local data from the memory module 130 may correspond to a data transmission process corresponding to an arrow corresponding to (2) in FIG. 3.

In some possible implementations, the HA module 120 may further store the local data in advance (for example, before receiving the operation command). This is not limited in this embodiment of this application.

The HA module 120 may further perform a calculation operation, for example, may perform a calculation operation on the obtained operand of the RDMA module 110 and the local data of the memory module 130 according to the obtained operation command from the RDMA module 110, to obtain a calculation result. After obtaining the calculation result, the HA module 120 may write the calculation result into the memory module 130 through the non-bus interface. Still refer to FIG. 3. That the HA module 120 writes the calculation result into the memory module 130 may correspond to a data transmission process corresponding to an arrow corresponding to (3) in FIG. 3.

For example, the HA module 120 may be implemented by a circuit module that reads data from the memory module 130, writes data into the memory module 130, and performs the calculation operation on the data. The HA module 120 may be a hardware module, for example, may be a general purpose processor, a digital signal processor (digital signal processor, DSP), an application-specific integrated circuit (application specific integrated circuit, ASIC), a field programmable gate array (field programmable gate array, FPGA) or another programmable logic device, a discrete gate or a transistor logic device, or a discrete hardware component. This is not limited.

For example, the memory module 130 may be a dynamic random access memory (dynamic random access memory, DRAM), or a synchronous dynamic random access memory (synchronous DRAM, SDRAM), or a double data rate synchronous dynamic random access memory (double data rate SDRAM, DDR SDRAM), and the like, which is not limited.

It should be noted that, that the RDMA module 110 communicates with the HA module 120 through the bus means that when data is exchanged between the RDMA module 110 and the HA module 120, the data needs to be transmitted through the bus. That the HA module 120 communicates with the memory module 130 through the non-bus interface means that the HA module 120 and the memory module 130 do not communicate with each other through the bus. That is, when data is exchanged between the HA module 120 and the memory module 130, the data does not need to be transmitted through the bus. For example, data between the HA module 120 and the memory module 130 may be transmitted through a private interface (or a dedicated interface).

Still refer to FIG. 3. As an example, in the system architecture 100, because the HA module 120 is disposed at a position that is relatively close to the memory module 130, a delay when the HA module 120 performs a read operation or a write operation on the memory module 130 may be shortened.

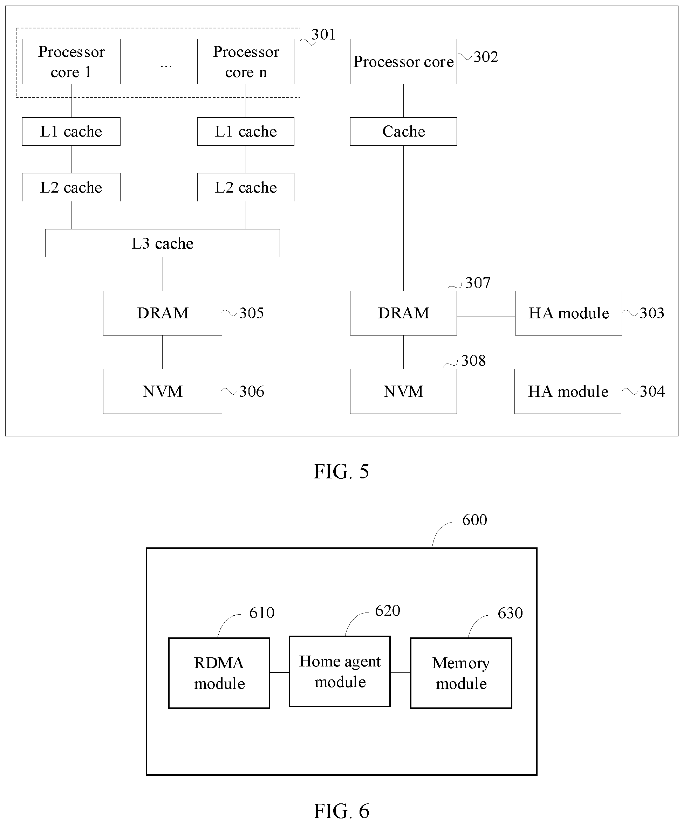

FIG. 5 is a schematic diagram of an HA module and a common processor core. An example that includes a DRAM, a non-volatile memory (non-volatile memory, NVM) as the memory module, and a CPU as the processor core is used for description. As shown in FIG. 5, a processor core (core) 1 to a processor core n 301 respectively perform a read or write operation on a DRAM 305 through a layer-1 (L1) cache (cache), a layer-2 (L2) cache, and a public layer-3 (L3) cache of the processor core (core) 1 to the processor core n 301, and the DRAM 305 may further perform data transmission with an NVM 306. The processor core 302 performs a read or write operation on a DRAM 307 by using the cache, and the DRAM 307 may further perform data transmission with an NVM 308. In addition, an HA module 303 may directly perform a read operation or write operation on the DRAM 307 without using the cache. In addition, an HA module 304 may perform a read operation or write operation on the NVM 308 without using a cache.

The processor core 1 to the processor core n 301, and the processor core 302 are used as a conventional computing system, and may be used as a computing processor core as a center. Because a frequency and a communication/processing speed are greatly different between a memory module and a computing processor core, the computing processor core generally does not directly communicate with the memory module, but needs to communicate with the memory module through a cache module and a bus. The HA module 303 and the HA module 304, as computing modules for dedicated calculation, can be directly connected to the memory module through a private interface, and implement matching between a frequency that are of the HA module 303 or the HA module 304 and a communication/processing speed, so that a read operation or a write operation on the memory module can be implemented without using a cache or a bus.

Therefore, in this embodiment of this application, the HA module performs calculation on the local data and the operand in the RDMA packet, and writes the obtained calculation result into the memory module through the non-bus interface, which can help prevent the RDMA module from reading the local data from the memory module through the bus and writing the calculation result into the memory module through the bus. Therefore, in this embodiment of this application, a calculation part in a node that performs collective communication can be optimized, which helps reduce an inter-node communication delay. Further, in this embodiment of this application, a quantity of bus access times can be reduced, thereby helping reduce the bandwidth consumption of the bus.

For example, when the system architecture 100 in FIG. 3 performs a collective communication algorithm operation, a delay in a data processing process includes the data transmission processes corresponding to the arrows corresponding to (1) to (3) in FIG. 3 and a calculation delay of the HA module. Because the read operation and the write operation performed by the HA module 120 on the memory module 130 do not need to involve the bus, the delay includes only one write operation performed on the bus, thereby helping to reduce the delay of the collective communication algorithm operation.

In some optional embodiments, when writing the calculation result into the memory module 130 through the non-bus interface, or after writing the calculation result into the memory module 130 through the non-bus interface, the HA module 120 may send a response (response) message corresponding to the operation command (that is, the process corresponding to (1) in FIG. 3), where the response message is used to indicate that the calculation operation corresponding to the operation command is completed. Herein, the response is a response to one bus write operation, and a delay of the response is included in the bus write operation. Correspondingly, the RDMA module 110 receives the response message, and can determine, according to the response message, that the calculation operation on the operand in the RDMA packet is completed.

After the RDMA module 110 receives the response message, the RDMA module 110 may instruct, in an interrupt or polling manner, the CPU 140 to complete the calculation operation. In an example, the RDMA module 110 may send an interrupt to the CPU 140 through the bus. When receiving the interrupt, the CPU 140 may determine that the calculation operation is completed. In another example, the CPU 140 may perform periodic polling to determine whether a calculation process is completed. In this case, the RDMA module 110 does not need to report the interrupt.

Compared with the data processing solution in FIG. 1, in the data processing solution in this embodiment of this application, the delay of the data processing process during the collective communication algorithm operation includes only one write operation on the bus. Therefore, the delay of the collective communication algorithm operation is greatly reduced, and system performance is improved.

In addition, in the data processing solution in this embodiment of this application, the CPU needs only one interrupt or polling operation, and does not need to perform a read operation or a write operation on the memory module. Therefore, compared with the solution shown in FIG. 1, this embodiment of this application can improve processing efficiency of the CPU.

Compared with the data processing solution in FIG. 2, in the data processing solution in this embodiment of this application, the delay of the data processing process during the collective communication algorithm operation includes only one write operation on the bus. When a collective communication operation needs to be performed on a large amount of data, the data processing solution in this embodiment of this application can significantly reduce the delay of the collective communication algorithm operation, and improve system performance.

FIG. 6 is a schematic block diagram of an apparatus 600 for data processing according to an embodiment of this application. As shown in FIG. 6, the apparatus 600 includes a remote direct memory access RDMA module 610, a home agent module 620 and a memory module 630. The RDMA module 610 communicates with the home agent module 620 through a bus, and the home agent module 620 communicates with the memory module 630 through a non-bus interface.

The RDMA module 610 is configured to:
receive an RDMA packet, and obtain an operand in the RDMA packet; and
send a first command and the operand to the home agent module through the bus, where the first command is used to instruct the home agent module to perform a calculation operation on the operand.

The home agent module 620 is configured to:
perform calculation on the operand and local data according to the first command to obtain a calculation result; and
write the calculation result to the memory module through the non-bus interface.

In some optional embodiments, the home agent module 620 is further configured to read the local data from the memory module through the non-bus interface.

In some optional embodiments, the home agent module 620 is further configured to send a response message corresponding to the first command to the RDMA module through the bus, where the response message is used to indicate that the calculation operation is completed.

In some optional embodiments, the apparatus 600 may further include a central processing unit CPU. The RDMA module 610 is further configured to report an interrupt to the central processing unit CPU after receiving the response message, where the interrupt is used to indicate completion of the calculation operation.

In some optional embodiments, the apparatus 600 may further include a central processing unit CPU. The RDMA module 610 is further configured to receive polling of the CPU to return completion of the calculation operation.

In some optional embodiments, the RDMA module 610 is specifically configured to determine, according to a first indication field in a packet header of the RDMA packet, that a collective communication calculation needs to be performed on data in a payload of the RDMA packet; and determine the data in the payload as the operand.

In some optional embodiments, the collective communication calculation includes a collective communication MPI _reduce calculation, or a collective communication MPI_allreduce calculation.

In some optional embodiments, the RDMA module 610 is further configured to: determine, according to a second indication field in the packet header of the RDMA packet, the calculation operation that needs to be performed on the operand; and generate the first command according to the calculation operation.

In some optional embodiments, the calculation operation includes at least one of an ADD operation, a MAX operation, an AND operation, an OR operation, an exclusive OR operation, and a MIN operation.

In some optional embodiments, the RDMA module is an RDMA network interface controller.

Functions and actions of the modules or the units in the foregoing apparatus 600 are merely examples for description. For the modules or the units in the apparatus 600, refer to the descriptions of the modules or the units in the foregoing system 100. Details are not described herein again.

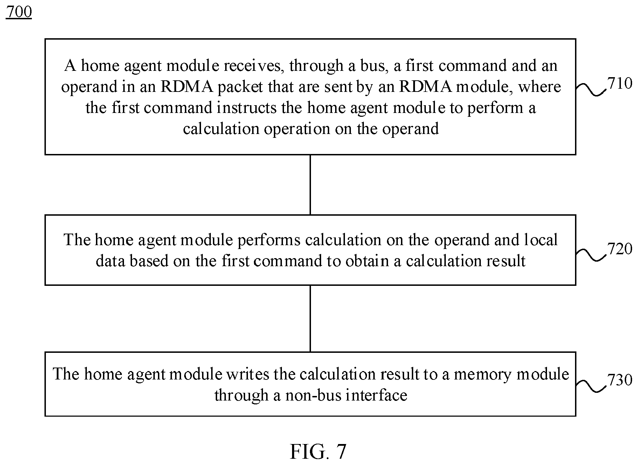

FIG. 7 is a schematic flowchart of a method 700 for data processing according to an embodiment of this application. The method 700 may be applied to an apparatus that includes a remote direct memory access RDMA module, a home agent module, and a memory module, for example, the apparatus 600 or the system architecture 100. The method 700 includes the following steps 710 to 730.

710: The home agent module receives, through a bus, a first command and an operand in an RDMA packet that are sent by the RDMA module, where the first command is used to instruct the home agent module to perform a calculation operation on the operand.

720: The home agent module performs calculation on the operand and local data according to the first command to obtain a calculation result.

730: The home agent module writes the calculation result to the memory module through a non-bus interface.

In some optional embodiments, the method 700 may further include: The RDMA module receives the RDMA packet, and obtains the operand in the RDMA packet.

The RDMA module sends the first command and the operand to the home agent module through the bus.

In some optional embodiments, the method 700 may further include: The home agent module reads the local data from the memory module through the non-bus interface.

In some optional embodiments, the method 700 further includes: The home agent module sends, through the bus, a response message corresponding to the first command to the RDMA module, where the response message is used to indicate that the calculation operation is completed.

In some optional embodiments, the method 700 further includes: The RDMA module reports an interrupt to a CPU after receiving the response message, where the interrupt is used to indicate completion of the calculation operation.

In some optional embodiments, the method 700 further includes: The RDMA module receives polling of the CPU to return completion of the calculation operation.

In some optional embodiments, the method 700 further includes: The RDMA module determines, according to a first indication field in a packet header of the RDMA packet, that a collective communication calculation needs to be performed on data in a payload of the RDMA packet. The RDMA module determines the data in the payload as the operand.

In some optional embodiments, the collective communication calculation includes a collective communication MPI _reduce calculation, or a collective communication MPI_allreduce calculation.

In some optional embodiments, the method 700 further includes: The RDMA module determines, according to a second indication field in the packet header of the RDMA packet, the calculation operation that needs to be performed on the operand. The RDMA module generates the first command according to the calculation operation.

In some optional embodiments, the calculation operation includes at least one of an ADD operation, a MAX operation, an AND operation, an OR operation, an exclusive OR operation, and a MIN operation.

In some optional embodiments, the RDMA module is an RDMA network interface controller.

Steps or processing processes included in the foregoing method 700 are merely examples for description. For the method 700, reference may be made to descriptions of the modules or units in the foregoing system 100. Details are not described herein again.

It should be understood that, in embodiments of this application, sequence numbers of the foregoing processes do not mean execution sequences. The execution sequences of the processes should be determined according to functions and internal logic of the processes, and should not be construed as any limitation on the implementation processes of embodiments of this application.

It should be further understood that numbers such as "first" and "second" in embodiments of this application are merely for differentiation for ease of description, and are not intended to limit the scope of embodiments of this application.

A person of ordinary skill in the art may be aware that the units and algorithm steps in the examples described with reference to embodiments disclosed in this specification can be implemented by electronic hardware or a combination of computer software and electronic hardware. Whether the functions are performed by hardware or software depends on particular applications and design constraint conditions of the technical solutions. A person skilled in the art may use different methods to implement the described functions for each particular application, but it should not be considered that the implementation goes beyond the scope of this application.

In several embodiments provided in this application, it should be understood that the disclosed system, apparatus, and method may be implemented in another manner. For example, the described apparatus embodiment is merely an example. For example, the unit division is merely logical function division and may be other division in actual implementation. For example, a plurality of units or components may be combined or integrated into another system, or some features may be ignored or may not be performed. In addition, the displayed or discussed mutual couplings or direct couplings or communication connections may be indirect couplings or communication connections through some interfaces, apparatuses or units, and may be implemented in electrical, mechanical, or other forms.

The units described as separate parts may or may not be physically separate, and parts displayed as units may or may not be physical units, may be located in one position, or may be distributed on a plurality of network units. Some or all of the units may be selected based on actual requirements to achieve the objectives of the solutions of embodiments.

In addition, functional units in embodiments of this application may be integrated into one processing unit, or each of the units may exist alone physically, or two or more units are integrated into one unit.

When the functions are implemented in a form of a software functional unit and sold or used as an independent product, the functions may be stored in a computer-readable storage medium. Based on such an understanding, the technical solutions of this application essentially, or the part contributing to the prior art, or some of the technical solutions may be implemented in a form of a software product. The software product is stored in a storage medium, and includes several instructions for instructing a computer device (which may be a personal computer, a server, a network device, or the like) to perform all or some of the steps of the methods described in embodiments of this application. The foregoing storage medium includes any medium that can store program code, for example, a USB flash drive, a removable hard disk, a read-only memory (read-only memory, ROM), a random access memory (random access memory, RAM), a magnetic disk, or an optical disc.

The foregoing descriptions are merely specific implementations of this application, but are not intended to limit the protection scope of this application. Any variation or replacement readily figured out by a person skilled in the art within the technical scope disclosed in this application shall fall within the protection scope of this application. Therefore, the protection scope of this application shall be subject to the protection scope of the claims.

## Claims

1. A data processing apparatus, comprising a remote direct memory access RDMA module, a home agent module and a memory module, wherein the RDMA module communicates with the home agent module through a bus, and the home agent module communicates with the memory module through a non-bus interface;
the RDMA module is configured to:
receive an RDMA packet, and obtain an operand in the RDMA packet; and
send a first command and the operand to the home agent module through the bus, wherein the first command is used to instruct the home agent module to perform a calculation operation on the operand;
the home agent module is configured to:
perform calculation on the operand and local data according to the first command to obtain a calculation result; and
write the calculation result to the memory module through the non-bus interface.

2. The apparatus according to claim 1, wherein the home agent module is further configured to read the local data from the memory module through the non-bus interface.

3. The apparatus according to claim 1 or 2, wherein
the home agent module is further configured to send a response message corresponding to the first command to the RDMA module through the bus, wherein the response message is used to indicate that the calculation operation is completed.

4. The apparatus according to claim 3, further comprising a central processing unit CPU, wherein
the RDMA module is further configured to report an interrupt to the CPU after receiving the response message, and the interrupt is used to indicate completion of the calculation operation.

5. The apparatus according to claim 3, further comprising a CPU, wherein
the RDMA module is further configured to receive polling of the CPU to return completion of the calculation operation.

6. The apparatus according to any one of claims 1 to 5, wherein the RDMA module is specifically configured to:
determine, according to a first indication field in a packet header of the RDMA packet, that a collective communication calculation needs to be performed on data in a payload of the RDMA packet; and
determine the data in the payload as the operand.

7. The apparatus according to claim 6, wherein the collective communication calculation comprises a collective communication MPI _reduce calculation, or a collective communication MPI_allreduce calculation.

8. The apparatus according to any one of claims 1 to 7, wherein the RDMA module is further configured to:
determine, according to a second indication field in the packet header of the RDMA packet, the calculation operation that needs to be performed on the operand; and
generate the first command according to the calculation operation.

9. The apparatus according to any one of claims 1 to 8, wherein the calculation operation comprises at least one of an ADD operation, a MAX operation, an AND operation, an OR operation, an exclusive OR operation, and a MIN operation.

10. The apparatus according to any one of claims 1 to 9, wherein the RDMA module is an RDMA network interface controller.

11. A data processing method, comprising:
receiving, by a home agent module through a bus, a first command and an operand in an RDMA packet that are sent by an RDMA module, wherein the first command is used to instruct the home agent module to perform a calculation operation on the operand;
performing, by the home agent module, calculation on the operand and local data according to the first command to obtain a calculation result; and
writing, by the home agent module, the calculation result to a memory module through a non-bus interface.

12. The method according to claim 11, further comprising:
reading, by the home agent module through the non-bus interface, the local data from the memory module.

13. The method according to claim 11 or 12, further comprising:
sending, by the home agent module through the bus, a response message corresponding to the first command to the RDMA module, wherein the response message is used to indicate that the calculation operation is completed.

14. The method according to claim 13, further comprising:
reporting, by the RDMA module, an interrupt to a central processing unit CPU after receiving the response message, wherein the interrupt is used to indicate completion of the calculation operation.

15. The method according to claim 13, further comprising:
receiving, by the RDMA module, polling of a CPU to return completion of the calculation operation.

16. The method according to any one of claims 11 to 15, further comprising:
determining, by the RDMA module according to a first indication field in a packet header of the RDMA packet, that a collective communication calculation needs to be performed on data in a payload of the RDMA packet; and
determining, by the RDMA module, the data in the payload as the operand.

17. The method according to claim 16, wherein the collective communication calculation comprises a collective communication MPI _reduce calculation, or a collective communication MPI_allreduce calculation.

18. The method according to any one of claims 11 to 17, further comprising:
determining, by the RDMA module according to a second indication field in the packet header of the RDMA packet, the calculation operation that needs to be performed on the operand; and
generating, by the RDMA module, the first command according to the calculation operation.

19. The method according to any one of claims 11 to 18, wherein the calculation operation comprises at least one of an ADD operation, a MAX operation, an AND operation, an OR operation, an exclusive OR operation, and a MIN operation.

20. The method according to any one of claims 11 to 19, wherein the RDMA module is an RDMA network interface controller.
